# EUROPEAN PATENT SPECIFICATION

(11) **EP 3 328 515 B1**
(45) Date of publication and mention of the grant of the patent: **29.04.2020**
(21) Application number: 16831338.5
(22) Date of filing: 28.07.2016
(51) Int. Cl.: B01D 37/00, B01D 37/02, B01D 39/06, B01J 20/10, B01J 20/14, B01J 20/28, B01J 20/32, C12H 1/044

(54) **CHILL-PROOFING COMPOSITE FILTER AID AND RELATED METHODS**
KÄLTEBESTÄNDIGES VERBUNDFILTERHILFSMITTEL UND DAZUGEHÖRIGE VERFAHREN
MOYEN DE FILTRATION COMPOSITE AUXILIAIRE ETANT RÉSISTANT AU FROID ET PROCÉDÉS ASSOCIÉS

(30) Priority: 29.07.2015 US 201562198474 P
(43) Date of publication of application: 06.06.2018
(73) Proprietor: Imerys Filtration Minerals, Inc., San Jose, CA 95112 (US)
(72) Inventor: FLEMING, Robert, San Jose, CA 95119 (US); BIRMINGHAM, Scot, San Francisco, CA 94102 (US); DIAS, Nathan, San Jose, CA 95148 (US)
(74) Representative: Haseltine Lake Kempner LLP
(86) International application number: PCT/US2016/044429
(87) International publication number: WO 2017/019845

(56) References cited:
- WO-A1-2014/201033
- GB-A- 938 153
- US-A1- 2009 261 041
- US-A1- 2012 172 195
- US-A1- 2015 190 778
- US-B2- 8 242 050
- US-B2- 8 242 050

## Description

### Field of Disclosure

The present disclosure relates to chill-proofing composite filter aids and related methods, and more particularly, to chill-proofing composite filter aids including a filtration component and an adsorption component including precipitated silica, and related methods.

### Background

In many filtration applications, a filtration device includes both a filter element, such as a septum, and a filter aid material. The filter element may be of any form that supports a filter aid material, for example, a cylindrical tube or wafer-like structure covered with a plastic or metal fabric of sufficiently fine weave. The filter element may be a porous structure having a filter element void to allow material of a certain size to pass through the filtration device. The filter aid material may include one or more filtration components, which may include inorganic powders or organic fibrous materials. Such filter aid materials may be used in combination with a filter element to enhance filtration performance. Filtration components for use in a filter aid material may include materials, such as, for example, diatomaceous earth, perlite, and cellulose. As an example, the filter aid material may initially be applied to the filter septum in a process known as "pre-coating." Pre-coating generally involves mixing a slurry of water and filter aid material and introducing the slurry into a stream flowing through the septum. During this process, a thin layer, for example, 1.5 millimeters to about 3 millimeters of filter aid material, may be deposited on the filter septum, thus forming the filtration device.

During the filtration of a fluid, various particles in the fluid may be trapped by the filter aid material. The combined layers of filter aid material and the particles and/or constituents to be removed accumulate on the surface of the filter septum. Those combined layers are known as "filter cake." As more particles and/or constituents are deposited and accumulate on the filter cake, the filter cake may become saturated with debris to the point where fluid is no longer able to pass through the filter septum.

To counteract saturation, a process known as "body feeding" may be used. Body feeding is the process of introducing additional filter aid material into the fluid to be filtered before the fluid reaches the filter cake. The filter aid material will follow the path of the unfiltered fluid and will eventually reach the filter cake. Upon reaching the filter cake, the added filter aid material tends to bind to the filter cake in much the same way the filter aid material adhered to the filter septum during the pre-coating process. The additional layer of filter aid material may cause the filter cake to swell and thicken, and may increase the capacity of the filter cake to trap additional debris. The filter aid material typically has an open porous structure, which maintains an open structure in the filter cake, thus rehabilitating permeability of the filter cake.

In the field of fluid filtration, many methods of particle separation employ materials chosen from, for example, diatomaceous earth, expanded perlite, natural glasses, and cellulose materials, as porous filtration components. Those materials have intricate and porous structures that may be particularly suited to the effective physical entrapment of particles in filtration processes. Those intricate and porous structures create networks of void spaces that may result in buoyant filtration media particles that have apparent densities similar to those of the fluids in which they are suspended. Porous filtration components may be employed when improving the clarity of fluids. The porous filtration components may be used to remove undesired particles from a fluid. However, while well-suited for the task of removing particulate matter by physical entrapment, such porous filtration components may not be as well-suited for removing particulate matter from a fluid by the process of adsorption.

As used herein, "adsorption" refers to the tendency of molecules from an ambient fluid phase to adhere to the surface of a solid. This should not to be confused with the term "absorption," which results when molecules from an ambient fluid diffuse into a solid, as opposed to adhering to the surface of the solid. To achieve a desired adsorptive capacity, an adsorbent component may have a relatively large surface area, which may imply a fine porous structure.

One method of using an adsorbent component is to place the adsorbent component in contact with a fluid containing particles and/or constituents to be adsorbed, either to purify the fluid by removing the particles and/or constituents, or to isolate the particles and/or constituents so as to purify them.

Diatomaceous earth is a sediment enriched in biogenic silica in the form of the siliceous frustules of diatoms, a diverse array of microscopic, single-cell algae. Those frustules are sufficiently durable to retain much of their microscopic structure through long periods of geological time and through thermal processing. Diatomaceous earth products have an inherently intricate and porous structure composed primarily of silica. This characteristic renders them useful in filter aids.

As used herein, "turbidity" refers to the cloudiness or haziness of a fluid, where the haze may be caused by individual particles that are suspended in the fluid. Materials that may cause a fluid to be turbid include, for example, clay, silt, organic matter, inorganic matter, and microscopic organisms. Turbidity may be measured by using an instrument known as a nephelometric turbidimeter that emits a beam of light through a column of the fluid being tested. A detector is placed perpendicular to the beam of light and 90° scatter is measured. A fluid that contains a relatively large number of suspended particles will reflect a greater amount of light than a fluid containing fewer particles. Turbidity measured in this manner may be quantified in Nephelometric Turbidity Units ("NTU"). Turbidity may also be measured via gravimetric methods.

A trade-off typically exists in filter aid technology between the permeability of the porous media used as a filtration component and its turbidity removal capabilities. Filtration components are produced in grades over a wide range of permeability ratings. As the permeability of the filtration component decreases, the ability of the filter aid material to remove small particles may increase, but often at the expense of a slower flow rate through the filter-aid material. Conversely, as the filtration component permeability increases, the ability of the filter aid material to filter particles may decrease and, consequently, the fluid flow through the filter aid material increases. The extent to which this takes place may depend on the type and/or particle size distribution of the suspended particles being removed from the fluid.

It is currently known that, unless specially treated, some chilled fluids, such as, for example, chilled beer, may undergo a chemical reaction that results in the production of insoluble particles. In such chemical reactions, hydrogen bonds may form between haze-active proteins and/or polyphenols in a chilled condition. The reacted proteins and/or polyphenols may then grow to large particles, which cause the fluid to become turbid, a condition also known as "chill-haze." Chill-haze may be undesirable to both consumers and brewers. Turbidity may be most pronounced when the fluid has been chilled below room temperature. In certain instances, such as when the particles are proteins, as the temperature increases, the hydrogen bonds that hold the proteins together may be broken. "Chill-proofing" may include a process to remove particles creating chili-haze in fluids such as beer.

Thus, it may be desirable to develop filter aids and related methods for chill-proofing fluids, such as beer, that do not necessarily suffer from possible drawbacks associated with prior filter aids and methods. The filter aids and methods disclosed herein may mitigate or eliminate one or more of such drawbacks. Document US8242050 B2 discloses a filter-aid material and a method using such a filter-aid material for removing particles and /or constituents from a fluid. The filter-aid material comprises at least one adsorbent and one filtration component.

### SUMMARY

In the following description, certain aspects and embodiments will become evident. It should be understood that the aspects and embodiments, in their broadest sense, could be practiced without having one or more features of these aspects and embodiments. It should be understood that these aspects and embodiments are merely exemplary. The present invention is defined in and by the appended claims.

According to a first aspect, a chill-proofing composite filter aid includes a filtration-component and an adsorption component including precipitated silica at least partially coating the filtration component. The composite filter aid has a pore volume of at least 0.15 to 0.35 cm³/gram at an average pore size between 3 nanometers and 15 nanometers, as measured by nitrogen adsorption. The filtration component includes diatomaceous earth.

According to yet another aspect, a method for removing particles from a fluid may include providing a chill-proofing composite filter aid. The composite filter aid includes a filtration component comprising diatomaceous earth and an adsorption component including precipitated silica at least partially coating the filtration component. The composite filter aid has a pore volume of at least 0.15 to 0.35 cm³/gram at an average pore size between 3 nanometers and 15 nanometers, as measured by nitrogen adsorption. The method includes pre-coating a filter element with the composite filter aid, and passing a fluid containing particles to be adsorbed through the coated filter element.

According to a further aspect, a method of making a chill-proofing composite filter aid includes providing a filtration component and at least partially coating the filtration component with an adsorption component including precipitated silica. The composite filter aid has a pore volume of at least 0.15 to 0.35 cm³/gram at an average pore size between 3 nanometers and 15 nanometers, as measured by nitrogen adsorption. The filtration component comprises diatomaceous earth.

Aside from the arrangements set forth above, the embodiments could include a number of other arrangements, such as those explained hereinafter. It is to be understood that both the foregoing description and the following description are exemplary only.

### BRIEF DESCRIPTION OF THE DRAWINGS

The accompanying drawings, which are incorporated in and constitute a part of this description, illustrate several exemplary embodiments and together with the description, serve to explain the principles of the embodiments. In the drawings,
Fig. 1 is a graph showing the incremental pore volume (cm³/gram) vs. average pore size (nanometers (nm)) for four sample composite filter aids.
Fig. 2 is a graph showing the incremental pore volume (cm³/gram) vs. average pore size (nanometers (nm)) for four sample composite filter aids.
Fig. 3 is a graph showing the correlation between filter aid pore volume and chill haze reduction tested for high gravity BUDWEISER® beer.
Fig. 4 is a graph showing pore size vs. post-reaction pH adjustment of precipitated silica samples.
Fig. 5 is a graph showing the pore volume of two filter aid samples as a function of precipitated silica loading on diatomaceous earth.

### DESCRIPTION OF EXEMPLARY EMBODIMENTS

Reference will now be made in more detail to a number of exemplary embodiments of the compositions and methods.

The chill-proofing composite filter aid includes a filtration component and an adsorption component including precipitated silica at least partially coating the filtration component. The composite filter aid has a pore volume of at least 0.15 to 0.35 cm³/gram at an average pore size between 3 nanometers and 15 nanometers, as measured by nitrogen adsorption. The filtration component includes diatomaceous earth. As used herein, the term "composite filter aid" refers to a material including at least one filtration component and at least one adsorption component that are associated with one another. According to some embodiments, the composite filter aid may have properties significantly different from either the filtration component or adsorption component alone.

Without wishing to be bound by theory, it is believed that the above-noted combination of a composite filter aid having a pore volume of at least about 0.15 cm³/gram at an average pore size between 3 nanometers and 15 nanometers, may result in more effective chill-proofing of fluids, such as, for example, beer. It is believed that this combination may result in adsorbing an increased or maximized amount of chill haze active proteins (i.e., proteins believed to cause chill haze), while not significantly adsorbing other desirable proteins, such as, for example, foam active proteins,

According to some embodiments, it may be possible to obtain such a combination by controlling the at least partial coating of the precipitated silica on the filtration component. For example, for embodiments in which the silica is precipitated in situ onto the filtration component (e.g., diatomaceous earth), the reaction (during and/or after the reaction) may be controlled by controlling one or more of the reaction pH, percentage of solids of the reaction, and the percentage of silica precipitated onto the filtration component, to achieve the desired combination of pore volume and average pore size.

Precipitated silicas are a form of amorphous, non-crystalline silicon dioxide (SiO₂) that is typically porous. In some embodiments, the adsorption component may be a precipitated silica. In some embodiments, the adsorption component may be a silica gel. In some embodiments, the adsorption component may be a colloidal silica. In some embodiments, the adsorption component may be a fumed silica. In some embodiments, the adsorption component may be a silica fume. In some embodiments, the adsorption component can also be chosen from silicates. Non-limiting examples of suitable silicates include aluminosilicate, calcium silicate, and magnesium silicate. In still other embodiments, the adsorption component may include alumina. In some embodiments, the adsorption component may include an aluminosilicate. In some embodiments, the adsorption component may include a porous alumina.

According to some embodiments, the composite filter aid may have a pore volume of at least about 0.20 cm³/gram at an average pore size between 3 nanometers and 15 nanometers, as measured by nitrogen adsorption. For example, the composite filter aid may have a pore volume of at least about 0.25 cm³/gram at an average pore size ranging from 3 nanometers and 15 nanometers, or a pore volume of at least about 0.30 cm³/gram at an average pore size between 3 nanometers and 15 nanometers.

The composite filter aid has a pore volume of ranging from at least 0.15 cm³/gram to 0.35 cm³/gram at an average pore size between 3 nanometers and 15 nanometers. For example, the composite filter aid may have a pore volume of ranging from at least about 0.20 cm³/gram to about 0.35 cm³/gram at an average pore size between 3 nanometers and 15 nanometers, a pore volume of ranging from at least about 0.25 cm³/gram to about 0.35 cm³/gram at an average pore size between 3 nanometers and 15 nanometers, or a pore volume of ranging from at least about 0.25 cm³/gram to about 0.30 cm³/gram at an average pore size between 3 nanometers and 15 nanometers.

According to some embodiments, the average pore size of the composite filter aid may be less than or equal to 15 nanometers. For example, the average pore size of the composite filter aid may be less than or equal to 12 nanometers, or less than or equal to 10 nanometers. According to some embodiments, the average pore size of the composite filter aid may be between 3 nanometers to 12 nanometers. For example, the average pore size of the composite filter aid may be between 3 nanometers to 10 nanometers. According to some embodiments, the average pore size of the composite filter aid may be between 5 nanometers to 15 nanometers. For example, the average pore size of the composite filter aid may be between 5 nanometers to 12 nanometers, or between 5 nanometers to 10 nanometers.

For example, the composite filter aid may exhibit a chill haze reduction of at least 30%, at least 35%, or at least 40%. Chill haze reduction may be determined by the Chapon Test (ISO 5725 (1, 6)).

According to some embodiments, the adsorption component is precipitated in situ onto the filtration component. For example, the composite filter aid may be obtained by reacting a dispersion of water, the filtration component (e.g., diatomaceous earth), and sodium silicate with sulfuric acid to a pH of 8.5, and thereafter rinsing the material with water and drying. According to some embodiments, the reaction may be controlled to achieve a desired pore volume (e.g., an increased pore volume) in a desired pore size range, Such embodiments may result in a composite filter aid that has a desired pore volume in a pore size range that increases or maximizes chill haze reduction in fluids such as beer. For example, according to some embodiments, this may be achieved by controlling one or more of the reaction pH (during and/or after the reaction), the percentage of solids of the reaction, and the percentage of silica precipitated onto the filtration component (e.g., diatomaceous earth).

When performing nitrogen adsorption, specific surface area may be calculated using the BET (Brunauer-Emmett-Teller) theory, while pore size and pore volume may be calculated using the BJH (Barrett-Joyner-Halenda) theory.

The application of BET theory to a particular adsorbent component yields a measure of the material's specific surface area, known as "BET surface area." BET surface area may be measured by any appropriate measurement technique known to those skilled in the art. In some embodiments, BET surface area is measured with a Gemini III 2375 Surface Area Analyzer, using nitrogen as the sorbent gas, from Micromeritics Instrument Corporation (Norcross, Ga., USA). As used herein, "surface area" refers to BET surface area, unless otherwise indicated.

According to some embodiments, the composite filter aid may have a BET surface area of at least 50 m²/gram, For example, the composite filter aid may have a BET surface area ranging from at least 50 m²/gram to 500 m²/gram, or ranging from at least 75 m²/gram to 250 m²/gram.

One technique for calculating pore size and pore volume is the Barrett-Joyner-Halenda (BJH) theory. The application of BJH theory to a particular adsorbent component yields a measure of the differential pore volume across a range of pore sizes. As used herein, pore volumes are calculated using the BJH theory unless otherwise indicated.

According to some embodiments, a large BET surface area of the adsorption component may permit the composite filter aid to reduce the number of particles and/or constituents that contribute to turbidity of the fluid. The composite filter aid may entrap particles and/or constituents from the unfiltered fluid, resulting in the filtered fluid having fewer particles and/or constituents. Further, the turbidity of a fluid filtered through the composite filter aids disclosed herein may be less than the turbidity of a fluid filtered through a simple mixture of an adsorption component and a filtration component, where the proportion of adsorption component to filtration component in the simple mixture is similar to, or even greater than, the proportion of adsorption component to filtration component of the composite filter aids disclosed herein. According to some embodiments, the turbidity of a fluid filtered through the composite filter aids disclosed herein may be less than the turbidity of a fluid filtered through a thermally-sintered or chemically-bonded composite of an adsorption component and a filtration component, where the proportion of adsorption component to filtration component in the thermally-sintered or chemically-bonded composite is similar to, or even greater than, the proportion of adsorption component to filtration component of the composite filter aids disclosed herein.

According to some embodiments, a method for removing particles from a fluid may include providing a chill-proofing composite filter aid. The composite filter aid includes a filtration component and an adsorption component including precipitated silica at least partially coating the filtration component. The composite filter aid has a pore volume of at least 0.15 to 0.35 cm³/gram at an average pore size between 3 nanometers and 15 nanometers. The method includes pre-coating a filter element with the composite filter aid, and passing a fluid containing particles to be adsorbed through the coated filter element. According to some embodiments of the method, the fluid includes beer, and the method includes removing particles from beer. The filtration component includes diatomaceous earth. According to some embodiments of this method, the composite filter aid incorporated into this method may have any of the characteristics of the composite filter aids described herein.

A method of making a chill-proofing composite filter aid includes providing a filtration component, and at least partially coating the filtration component with an adsorption component including precipitated silica. The composite filter aid has a pore volume of at least 0.15 to 0.35 cm³/gram at an average pore size between 3 nanometers and 15 nanometers. The filtration component includes diatomaceous earth. According to some embodiments of this method, the composite filter aid incorporated into this method may have any of the characteristics of the composite filter aids described herein.

According to some embodiments of the method, the adsorption component is precipitated in situ onto the surface of the filtration component. As a result of such embodiments, while simple mixtures may segregate upon suspension (e.g., in fluid, conveyance, or transport), the filter aid composition including at least one composite filter aid may retain both its component adsorptive and filtration properties. The in situ precipitation of the adsorption component on the at least one filtration component may also have superior absorptive and filtration properties than a thermally sintered or chemically bonded composite, for example, because the in situ precipitation process may produce a filter aid including at least one composite filter aid, wherein the adsorbent component is distributed substantially evenly on the filtration component and may present a relatively larger surface area for adsorption. The larger surface area may permit the filter aid to adsorb a greater fraction of chill haze forming proteins, which may result in a lower turbidity level for the filtered fluid after aging.

According to some embodiments of the method, the at least partially coating the filtration component with precipitated silica includes precipitating the precipitated silica in situ onto the filtration component. "Sodium silicate" refers herein to any one of several compounds including sodium oxide (Na₂O) and silica (SiO₂). Such combinations may include, for example, sodium ortho silicate (Na₄SiO₄), sodium meta silicate (Na₂SiO₃), and sodium disilicate (Na₂Si₂O₅). In some embodiments, the sodium silicate is a diatomite-based sodium silicate. In some embodiments, sodium silicate is substituted in whole or in part for at least one ammonium silicate and/or at least one alkali metal silicate, such as, for example, lithium, sodium, potassium, rubidium, and cesium silicates. Sodium silicate with a SiO₂/Na₂O ratio of about 3.2:1 and a concentration of 20% may be obtained, for example, from World Minerals, Inc. Sodium silicate with a SiO₂/Na₂O ratio of about 3:1 and a concentration of 34.6% may be obtained, for example, from PQ Corp.

Some embodiments of the method may include adding a sodium silicate solution to a filtration component suspension, raising the pH. The mass ratio of sodium silicate to the filtration component may be, for example, about 1:3, but other ratios are contemplated.

An acid, or a salt thereof, may then be added to the slurry in an amount sufficient to increase the acidity (i.e., reduce the pH) of the slurry to a pH range suitable for the precipitation of silica. Any suitable acid may be selected. In some embodiments, the acid may be sulfuric acid. In some embodiments, the acid may be phosphoric acid. In some embodiments, the acid may by hydrochloric acid, nitric acid, and/or acetic acid.

As the pH lowers, the slurry may be stirred periodically until gelling occurs. This may take about twenty-five to about sixty minutes, to a day or longer, depending on the acidity of the solution and the sodium silicate concentration in the slurry. The slurry may then be filtered. Water may be added to the suspension to aid filtration. The resulting cake may be washed with water. Then the cake may be dried until the excess fluid in the cake has evaporated. For example, the cake may be dried at a temperature ranging from about 110 degrees C to about 350 degrees C, although the cake itself will remain at temperatures not much higher than 100 degrees C during drying due to the presence of internal moisture.

The amount of the sodium silicate added may be chosen to control the pore size distribution in the composite filter aid. While increasing the percentage of precipitated silica generally acts to increase the filter aid material's ability to act as an adsorbent, it generally acts to decrease its ability to act as a filter material. Conversely, decreasing the percentage of precipitated silica generally acts to decrease the filter aid material's ability to act as an adsorbent while increasing its ability to act as a filter material.

According to some embodiments, the amount of the adsorption component in the composite filter aid may comprise from between about 5% to about 95% by weight of the total composite filter aid. In some embodiments, the adsorption component may comprise greater than about 10% by weight of the total composite filter aid. In some embodiments, the adsorption component may comprise greater than about 15% by weight of the total composite filter aid. In some embodiments, the adsorption component may comprise greater than about 25% by weight of the total composite filter aid. In some embodiments, the adsorption component may comprise less than about 40% by weight of the total composite filter aid. In some embodiments, the adsorption component may comprise less than about 50% by weight of the total composite filter aid. In some embodiments, the adsorption component may comprise from about 5% and about 40% by weight of the total composite filter aid. In some embodiments, the adsorption component may comprise from about 15% and 25% by weight of the total composite filter aid.

According to some embodiments, the amount of the filtration component in the composite filter aid may comprise from between about 5% to about 95% by weight of the total composite filter aid. In some embodiments, the filtration component may comprise greater than about 25% by weight of the total composite filter aid. In some embodiments, the filtration component may comprise greater than about 50% by weight of the total composite filter aid. In some embodiments, the filtration component may comprise greater than about 70% by weight of the total composite filter aid. In some embodiments, the filtration component may comprise less than about 80% by weight of the total composite filter aid. In some embodiments, the filtration component may comprise less than about 90% by weight of the total composite filter aid. In some embodiments, the filtration component may comprise from about 60% to about 95% by weight of the total composite filter aid. In some embodiments, the filtration component may comprise from about 75% to about 85% by weight of the total composite filter aid.

In some embodiments, the adsorption component may comprise from about 5% to about 40% by weight of the total composite filter aid, and the filtration component may comprise from about 60% to about 95% by weight of the total composite filter aid. In some embodiments, the adsorption component may comprise from about 15% to about 25% by weight of the total composite filter aid, and the filtration component may comprise from about 75% to about 85% by weight of the total composite filter aid. In some embodiments, the composite filter aid may comprise a greater amount by weight of the adsorption component than the filtration component.

After formation of the composite filter aid, according to some embodiments, the composite filter aid may then be mixed with at least one additional filtration component. The at least one additional filtration component may be chosen from any suitable filtration component previously known or hereinafter discovered, and may be either the same or different from the filtration component in the composite filter aid.

According to some embodiments, the method includes controlling at least one of pH, percentage of solids, and percentage of precipitated silica during precipitation of the precipitated silica onto the filtration component. According to some embodiments, the method includes controlling at least one of pH, percentage of solids, and percentage of precipitated silica after precipitation of the silica onto the filtration component. According to some embodiments, the method includes controlling at least one of pH, percentage of solids, and percentage of precipitated silica during and after precipitation of the silica onto the filtration component.

### Examples

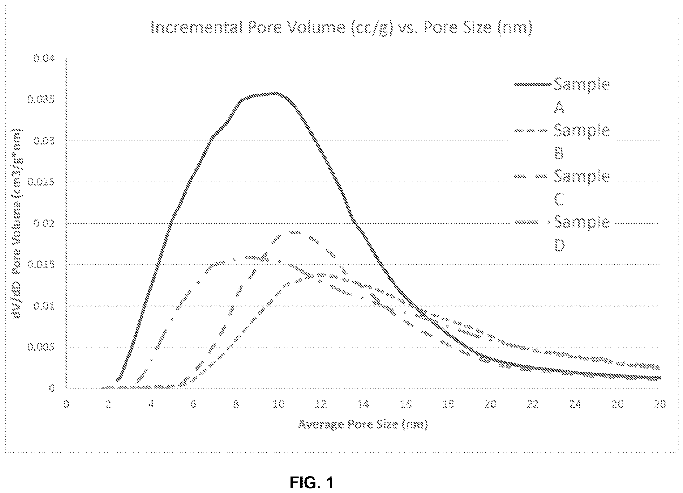

Four samples composite filter aids were prepared and tested to determine the pore volume as a function of average pore size. The four samples include a first sample (Sample A) consistent with exemplary embodiments disclosed herein, and three samples (Samples B-D) of conventional composite filter aids. Fig. 1 is a graph showing the incremental pore volume (cm³/gram) vs. average pore size (nanometers (nm)) for the four samples. As shown in Fig. 1, the Sample A has an increased pore volume compared to the tested conventional composite filter aids of Samples B-D. The pore volume in the 3 nanometer to 15 nanometer range of average pore size is believed more effective at adsorbing haze active proteins than in other average pore size ranges.

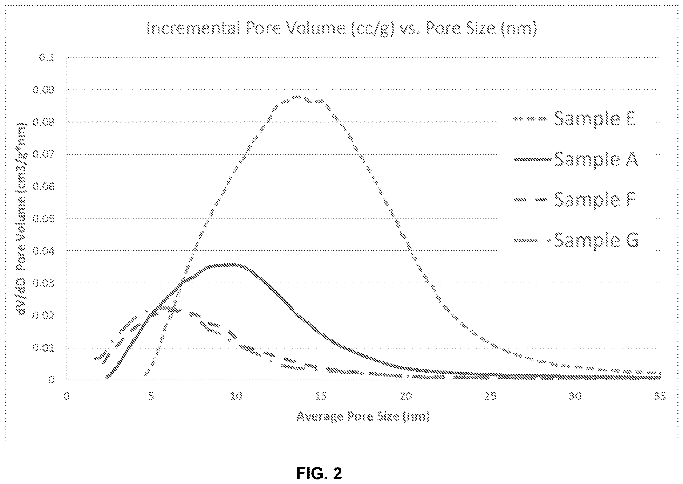

Sample A was also compared against a commercially available silica gel (Sample E) and two additional composite filter aid samples (Samples F and G). Fig. 2 is a graph showing the incremental pore volume (cm³/gram) vs. average pore size (nanometers (nm)) for Samples A and E-G. As shown in Fig. 2, the silica gel of Sample E has the highest pore volume, and its pore volume peaks at an average pore size of about 15 nanometers. This may be undesirable for at least two reasons. For example, the corresponding pore volume in the range desired for chill haze reduction is lower than for Sample E, and as silica gels age the pore sizes increase. As mentioned above, it is believed that an average pore size of about 15 nanometers is at the high end of the range of most effective average pore sizes for reducing chill haze, which is believed to be from 3 nanometers to 15 nanometers. Thus, Sample E may not be as effective at reducing chill haze as Sample 1, which has a pore volume that peaks about halfway between the desired average pore size range of 3 nanometers to 15 nanometers. Samples F and G have lower pore volumes than Sample 1, and the average pore volumes of Samples F and G peak at the low end of the range of average pore size desired for chill haze reduction. Thus, Sample A may be more effective at reducing chill haze than Samples E-G.

Table 1 below shows relevant data for a number of filter aid samples. The data includes data related to the reactions forming the filter aid samples, including percentage of solids, the reaction pH, the post reaction pH adjustment, the percentage of precipitated silica, and the reaction time. The data also includes the chill haze (EBC) of the fluids (i.e., beer) in which the samples were tested, the percentage chill haze reduction of the sample and beer, the measured pore volume of the sample, the measured pore volume of the sample measured between 3 nanometers and 15 nanometers, and the full range pore size in nanometers.

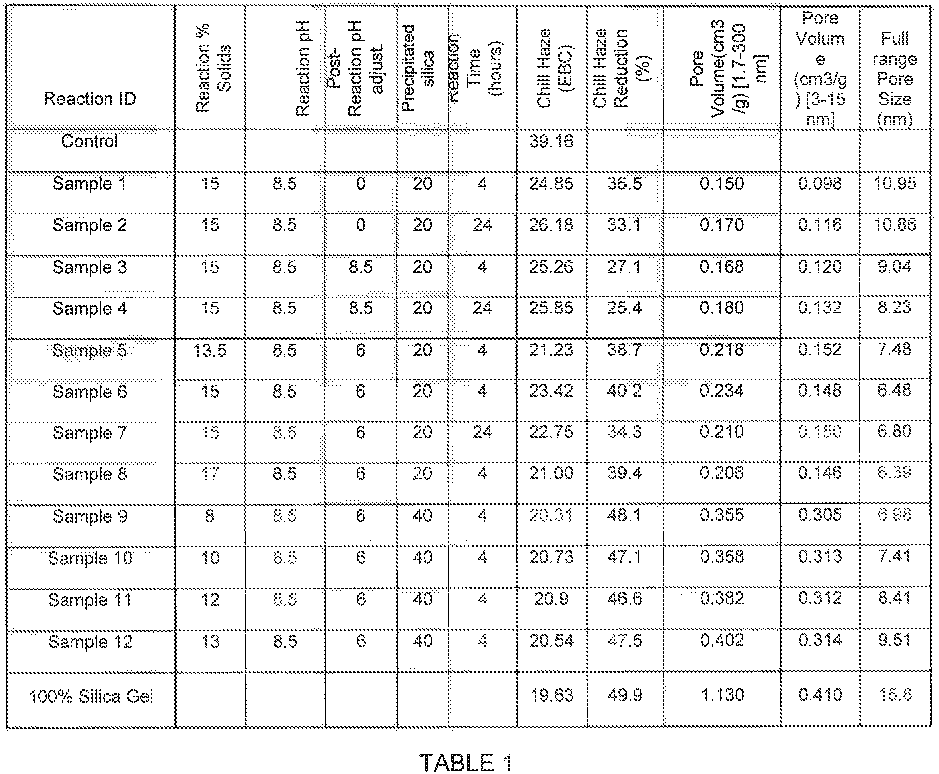

As shown in Table 1, the Control is a calcined diatomaceous earth filter aid (Celite Standard Super Cel, available from Imerys Filtration Minerals, Inc.), which provides a comparison for Samples 1-12. Samples 1-12 include a filtration component (i.e., diatomaceous earth) having a silica precipitated in situ onto the filtration component according to different reaction parameters. Samples 1 to 4 are not according to this invention. Samples 1 and 2 were not subjected to post-reaction pH adjustment, but have different reaction times. Samples 3 and 4 were subjected to post-reaction pH adjustment to adjust the pH to 8.5 and according to different reaction times. Samples 5 and 6 have different reaction solids and underwent post-reaction pH adjustment to reduce the pH to 6. Samples 7 and 8 have different reaction solids and reaction times, with post-reaction pH adjustment down to 6. Samples 9 and 10 have different reaction solids with the same reaction times, with post-reaction pH adjustment down to 6 and a higher precipitated silica content (40%) relative to Samples 1-8 (20%). Samples 11 and 12 have different reaction solids with the same reaction times, with post-reaction pH adjustment down to 6 and a higher precipitated silica content (40%) relative to Samples 1-8 (20%).

As can be seen from the data of Table 1, the chill-haze reduction is highest in Samples 5-12, which have a pore volume of at least about 0.15 cm³/gram or greater at an average pore size between 3 nanometers and 15 nanometers. Samples 9-12, which include 40% precipitated silica, have the highest chill-haze reduction and have a pore volume of at least about 0.3 cm³/gram at an average pore size between 3 nanometers and 15 nanometers.

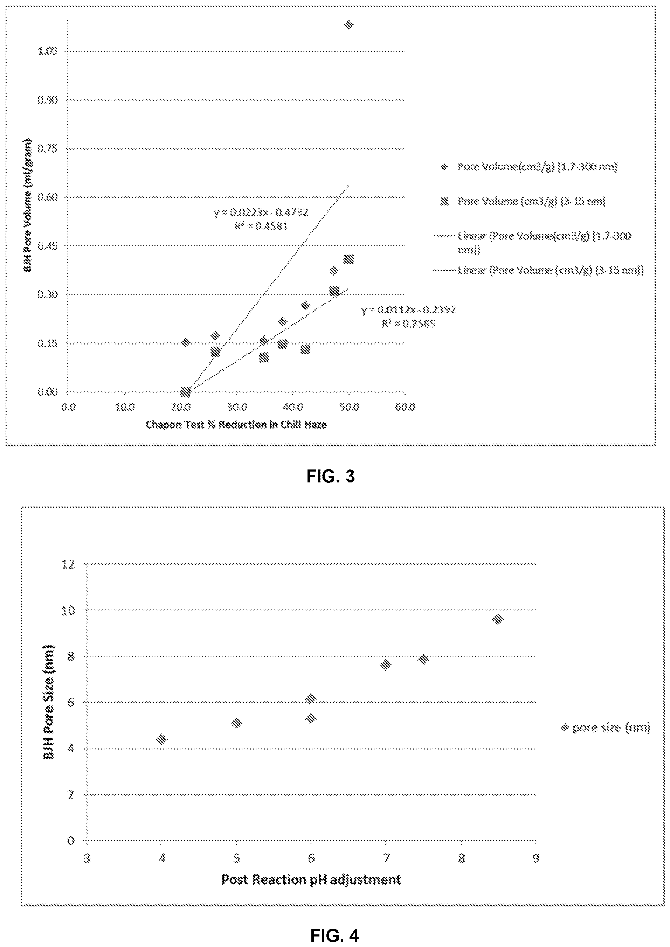

Fig. 3 is a graph showing the correlation between filter aid pore volume and chill haze reduction tested for high gravity BUDWEISER® beer. As shown in Fig. 3, as pore volume increases, chill haze reduction increases.

Fig. 4 is a graph showing the effect of post-reaction pH adjustment on the pore size of precipitated silica samples. As shown in Fig. 4, adjusting the pH of the composite filter aid post reaction affects the pore size. Reducing the pH reduces the pore size.

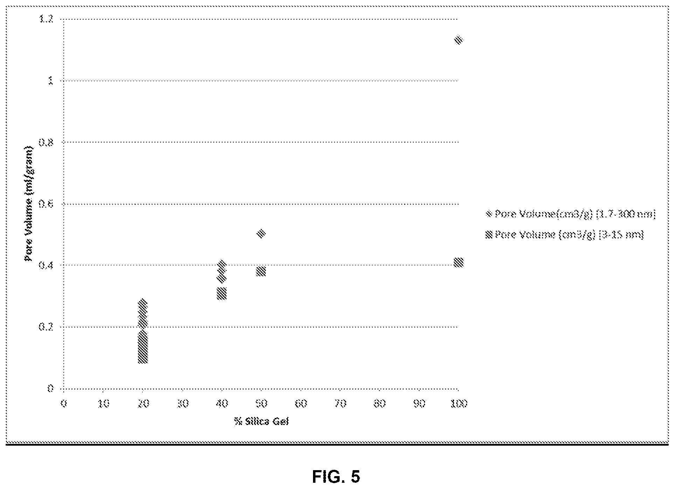

Fig. 5 is a graph showing the pore volume of two filter aid samples as a function of precipitated silica loading on diatomaceous earth, As shown in Fig. 5, adjusting the precipitated silica loading affects the pore volume, with the increased loading correlating with increased pore volume.

Other embodiments will be apparent to those skilled in the art from consideration of the specification and practice of the embodiments disclosed herein. It is intended that the specification and examples be considered as exemplary only.

## Claims

1. A chill-proofing composite filter aid comprising:
a filtration component; and
an adsorption component comprising precipitated silica at least partially coating the filtration component,
wherein the composite filter aid has a pore volume of at least 0.15 cm³/gram to 0.35 cm³/gram at an average pore size between 3 nanometers and 15 nanometers, further
wherein the filtration component comprises diatomaceous earth.

2. The composite filter aid of claim 1, wherein the composite filter aid has a pore volume of at least 0.20 cm³/gram at an average pore size between 3 nanometers and 15 nanometers or wherein the composite filter aid has a pore volume of at least 0.25 cm³/gram at an average pore size ranging from 3 nanometers and 15 nanometers or wherein the composite filter aid has a pore volume of at least 0.30 cm³/gram at an average pore size between 3 nanometers and 15 nanometers.

3. The composite filter aid of claim 1, wherein the composite filter aid has a pore volume of ranging from at least 0.25 cm³/gram to 0.30 cm³/gram at an average pore size between 3 nanometers and 15 nanometers.

4. The composite filter aid of claim 1, wherein the average pore size of the composite filter aid is less than 15 nanometers or
wherein the average pore size of the composite filter aid is less than or equal to 12 nanometers or
wherein the average pore size of the composite filter aid is less than or equal to 10 nanometers.

5. The composite filter aid of claim 1, wherein the average pore size of the composite filter aid is between 3 nanometers to 12 nanometers or
wherein the average pore size of the composite filter aid is between 3 nanometers to 10 nanometers or
wherein the average pore size of the composite filter aid is between 5 nanometers to 15 nanometers or
wherein the average pore size of the composite filter aid is between 5 nanometers to 12 nanometers or
wherein the average pore size of the composite filter aid is between 5 nanometers to 10 nanometers.

6. The composite filter aid of claim 1, wherein the adsorption component is precipitated in situ onto the filtration component.

7. The composite filter aid of claim 1, wherein the composite filter aid has a BET surface area of at least 50 m²/gram.

8. The composite filter aid of claim 1, wherein the composite filter aid has a BET surface area ranging from at least 50 m²/gram to 500 m²/gram or
wherein the composite filter aid has a BET surface area ranging from at least 75 m²/gram to 250 m²/gram.

9. The composite filter aid of claim 1, wherein the precipitated silica comprises silica gel.

10. A method for removing particles from a fluid, the method comprising:
providing a chill-proofing composite filter aid comprising
a filtration component comprising diatomaceous earth, and
an adsorption component comprising precipitated silica at least partially coating the filtration component,
wherein the composite filter aid has a pore volume of at least 0.15 cm³/gram to 0.35 cm³/gram at an average pore size between 3 nanometers and 15 nanometers;
pre-coating a filter element with the composite filter aid; and
passing a fluid containing particles to be adsorbed through the coated filter element wherein optionally the fluid includes beer.

11. A method of making a chill-proofing composite filter aid, the method comprising:
providing a filtration component;
at least partially coating the filtration component with an adsorption component comprising precipitated silica,
wherein the composite filter aid has a pore volume of at least 0.15 cm³/gram to 0.35 cm³/gram at an average pore size between 3 nanometers and 15 nanometers wherein the filtration component comprises diatomaceous earth.

12. The method of claim 11 wherein the at least partially coating the filtration component with precipitated silica comprises precipitating the silica in situ onto the filtration component.

## Patentansprüche

1. Kältestabilisierendes Verbundfilterhilfsmittel, umfassend:
eine Filtrationskomponente; und
eine Adsorptionskomponente, die gefälltes Siliciumdioxid aufweist und die Filtrationskomponente zumindest teilweise beschichtet,
wobei das Verbundfilterhilfsmittel bei einer durchschnittlichen Porengröße zwischen 3 Nanometer und 15 Nanometer ein Porenvolumen von mindestens 0,15 cm³/g bis 0,35 cm³/g aufweist und wobei die Filtrationskomponente ferner Kieselgur umfasst.

2. Verbundfilterhilfsmittel gemäß Anspruch 1, wobei das Verbundfilterhilfsmittel bei einer mittleren Porengröße zwischen 3 Nanometer und 15 Nanometer ein Porenvolumen von mindestens 0,20 cm³/g aufweist oder wobei das Verbundfilterhilfsmittel bei einer durchschnittlichen Porengröße zwischen 3 Nanometer und 15 Nanometer ein Porenvolumen von mindestens 0,25 cm³/g aufweist oder wobei das Verbundfilterhilfsmittel bei einer durchschnittlichen Porengröße zwischen 3 Nanometer und 15 Nanometer ein Porenvolumen von mindestens 0,30 cm³/g aufweist.

3. Verbundfilterhilfsmittel gemäß Anspruch 1, wobei das Verbundfilterhilfsmittel bei einer durchschnittlichen Porengröße zwischen 3 Nanometer und 15 Nanometer ein Porenvolumen von mindestens 0,25 cm³/g bis 0,30 cm³/g aufweist.

4. Verbundfilterhilfsmittel gemäß Anspruch 1, wobei die durchschnittliche Porengröße des Verbundfilterhilfsmittels kleiner als 15 Nanometer ist oder wobei die durchschnittliche Porengröße des Verbundfilterhilfsmittels kleiner als oder gleich 12 Nanometer ist oder
wobei die durchschnittliche Porengröße des Verbundfilterhilfsmittels kleiner als oder gleich 10 Nanometer ist.

5. Verbundfilterhilfsmittel gemäß Anspruch 1, wobei die durchschnittliche Porengröße des Verbundfilterhilfsmittels zwischen 3 Nanometer und 12 Nanometer liegt oder
wobei die durchschnittliche Porengröße des Verbundfilterhilfsmittels zwischen 3 Nanometer und 10 Nanometer liegt oder
wobei die durchschnittliche Porengröße des Verbundfilterhilfsmittels zwischen 5 Nanometer und 15 Nanometer liegt oder
wobei die durchschnittliche Porengröße des Verbundfilterhilfsmittels zwischen 5 Nanometer und 12 Nanometer liegt oder
wobei die durchschnittliche Porengröße des Verbundfilterhilfsmittels zwischen 5 Nanometer und 10 Nanometer liegt.

6. Verbundfilterhilfsmittel gemäß Anspruch 1, wobei die Adsorptionskomponente an Ort und Stelle auf die Filtrationskomponente ausgefällt wird.

7. Verbundfilterhilfsmittel gemäß Anspruch 1, wobei das Verbundfilterhilfsmittel eine BET-Oberfläche von mindestens 50 m²/g aufweist.

8. Verbundfilterhilfsmittel gemäß Anspruch 1, wobei das Verbundfilterhilfsmittel eine BET-Oberfläche von 50 m²/g bis 500 m²/g aufweist oder
wobei das Verbundfilterhilfsmittel eine BET-Oberfläche von 75 m²/g bis 250 m²/g aufweist.

9. Verbundfilterhilfsmittel gemäß Anspruch 1, wobei das gefällte Siliciumdioxid Kieselgel umfasst.

10. Verfahren, um Partikel aus einer Flüssigkeit zu entfernen, wobei das Verfahren aufweist: ein kältestabilisierendes Verbundfilterhilfsmittel bereitstellen, wobei das Verbundfilterhilfsmittel umfasst:
eine Filtrationskomponente, die Kieselgur aufweist und
eine Adsorptionskomponente, die gefälltes Siliciumdioxid aufweist und die Filtrationskomponente zumindest teilweise beschichtet,
wobei das Verbundfilterhilfsmittel bei einer durchschnittlichen Porengröße zwischen 3 Nanometer und 15 Nanometer ein Porenvolumen von mindestens 0,15 cm³/g bis 0,35 cm³/g aufweist;
das Filterelement mit dem Verbundfilterhilfsmittel vorbeschichten; und
eine Flüssigkeit, welche die zu adsorbierenden Partikel enthält, durch das beschichtete Filterelement leiten, wobei die Flüssigkeit gegebenenfalls Bier ist.

11. Verfahren zur Herstellung eines kältestabilisierenden Verbundfilterhilfsmittels, wobei das Verfahren umfasst: eine Filtrationskomponente bereitstellen;
die Filtrationskomponente zumindest teilweise mit einer Adsorptionskomponente beschichten, die gefälltes Siliciumdioxid aufweist,
wobei das Verbundfilterhilfsmittel bei einer durchschnittlichen Porengröße zwischen 3 Nanometer und 15 Nanometer ein Porenvolumen von mindestens 0,15 cm³/g bis 0,35 cm³/g aufweist und wobei die Filtrationskomponente Kieselgur umfasst.

12. Verfahren gemäß Anspruch 11, wobei die zumindest teilweise Beschichtung der Filtrationskomponente mit gefällter Kieselsäure umfasst, das Siliciumdioxid an Ort und Stelle auf die Filterkomponente auszufällen.

## Revendications

1. Un adjuvant de filtration composite de stabilisation au froid comprenant :
un composant de filtration ; et
un composant d'adsorption comprenant de la silice précipitée recouvrant au moins partiellement le composant de filtration,
dans lequel l'adjuvant de filtration composite a un volume de pores d'au moins 0,15 cm³/gramme à 0,35 cm³/gramme à une taille moyenne de pores comprise entre 3 nanomètres et 15 nanomètres, en outre
dans lequel le composant de filtration comprend de la terre de diatomées.

2. L'adjuvant de filtration composite selon la revendication 1, dans lequel l'adjuvant de filtration composite a un volume de pores d'au moins 0,20 cm³/gramme à une taille moyenne de pores comprise entre 3 nanomètres et 15 nanomètres ou dans lequel l'adjuvant de filtration composite a un volume de pores d'au moins 0,25 cm³/gramme à une taille moyenne de pores variant de 3 nanomètres à 15 nanomètres ou dans lequel l'adjuvant de filtration composite a un volume de pores d'au moins 0,30 cm³/gramme à une taille moyenne de pores comprise entre 3 nanomètres et 15 nanomètres.

3. L'adjuvant de filtration composite selon la revendication 1, dans lequel l'adjuvant de filtration composite a un volume de pores variant d'au moins 0,25 cm³/gramme à 0,30 cm³/gramme à une taille moyenne de pores comprise entre 3 nanomètres et 15 nanomètres.

4. L'adjuvant de filtration composite selon la revendication 1, dans lequel la taille moyenne de pores de l'adjuvant de filtration composite est inférieure à 15 nanomètres ou
dans lequel la taille moyenne de pores de l'adjuvant de filtration composite est inférieure ou égale à 12 nanomètres ou
dans lequel la taille moyenne de pores de l'adjuvant de filtration composite est inférieure ou égale à 10 nanomètres.

5. L'adjuvant de filtration composite selon la revendication 1, dans lequel la taille moyenne de pores de l'adjuvant de filtration composite est comprise entre 3 nanomètres et 12 nanomètres ou
dans lequel la taille moyenne de pores de l'adjuvant de filtration composite est comprise entre 3 nanomètres et 10 nanomètres ou
dans lequel la taille moyenne de pores de l'adjuvant de filtration composite est comprise entre 5 nanomètres et 15 nanomètres ou
dans lequel la taille moyenne de pores de l'adjuvant de filtration composite est comprise entre 5 nanomètres et 12 nanomètres ou
dans lequel la taille moyenne de pores de l'adjuvant de filtration composite est comprise entre 5 nanomètres et 10 nanomètres.

6. L'adjuvant de filtration composite selon la revendication 1, dans lequel le composant d'adsorption est précipité in situ sur le composant de filtration.

7. L'adjuvant de filtration composite selon la revendication 1, dans lequel l'adjuvant de filtration composite a une aire de surface BET d'au moins 50 m²/gramme.

8. L'adjuvant de filtration composite selon la revendication 1, dans lequel l'adjuvant de filtration composite a une aire de surface BET variant d'au moins 50 m²/gramme à 500 m²/gramme ou
dans lequel l'adjuvant de filtration composite a une aire de surface BET variant d'au moins 75 m²/gramme à 250 m²/gramme.

9. L'adjuvant de filtration composite selon la revendication 1, dans lequel la silice précipitée comprend du gel de silice.

10. Un procédé d'élimination de particules d'un fluide, le procédé comprenant :
la fourniture d'un adjuvant de filtration composite de stabilisation au froid comprenant
un composant de filtration comprenant de la terre de diatomées, et
un composant d'adsorption comprenant de la silice précipitée recouvrant au moins partiellement le composant de filtration,
dans lequel l'adjuvant de filtration composite a un volume de pores d'au moins 0,15 cm³/gramme à 0,35 cm³/gramme à une taille moyenne de pores comprise entre 3 nanomètres et 15 nanomètres ;
le pré-revêtement d'un élément de filtration avec l'adjuvant de filtration composite ; et
le passage d'un fluide contenant des particules à adsorber à travers l'élément de filtration revêtu dans lequel le fluide comprend éventuellement de la bière.

11. Un procédé de fabrication d'un adjuvant de filtration composite de stabilisation au froid, le procédé comprenant :
la fourniture d'un composant de filtration ;
le revêtement au moins partiel du composant de filtration avec un composant d'adsorption comprenant de la silice précipitée,
dans lequel l'adjuvant de filtration composite a un volume de pores d'au moins 0,15 cm³/gramme à 0,35 cm³/gramme à une taille moyenne de pores comprise entre 3 nanomètres et 15 nanomètres, dans lequel le composant de filtration comprend de la terre de diatomées.

12. Le procédé selon la revendication 11 dans lequel le revêtement au moins partiel du composant de filtration avec de la silice précipitée comprend la précipitation de la silice in situ sur le composant de filtration.
